# EUROPÄISCHE PATENTANMELDUNG

(11) **EP 2 607 025 A1**
(43) Veröffentlichungstag der Anmeldung: **26.06.2013**
(21) Anmeldenummer: 12191090.5
(22) Anmeldetag: 02.11.2012
(51) Int. Cl.: B25D 9/08, B25D 9/16, B25D 9/26, B25C 1/04, B23D 51/18

(54) **Pneumatische Werkzeugvorrichtung**

(30) Priorität: 19.12.2011 DE 102011088979
(71) Anmelder: ROBERT BOSCH GMBH, 70442 Stuttgart (DE)
(72) Erfinder: Schlesak, Gerd, 71732 Tamm (DE); Schomburg, Helmut, 71229 Leonberg (DE); Heidrich, Markus, 71229 Leonberg (DE); Kuespert, Klaus, 70771 Leinfelden-Echterdingen (DE); Dukart, Anton, 70839 Gerlingen (DE); Lennartz, Juergen, 73760 Ostfildern (DE); Fischer, Martin, 71229 Leonberg (DE)

(57) **Zusammenfassung**

Die Erfindung geht aus von einer pneumatischen Werkzeugvorrichtung, insbesondere für eine Handwerkzeugmaschine, mit zumindest einem bewegbar gelagerten Arbeitskörper (12a,b), der durch eine abwechselnde Druckbeaufschlagung vor und hinter dem Arbeitskörper (12a,b) hin- und her bewegbar ist, und mit zumindest einem Schaltventil (16a,b) zu einer Schaltung der Druckbeaufschlagung.

Es wird eine Fremdsteuereinheit (20a,b) vorgeschlagen, die das Schaltventil (16a,b) steuert.

## Beschreibung

### Stand der Technik

Es sind bereits pneumatische Werkzeugvorrichtungen, insbesondere für Handwerkzeugmaschinen, mit einem bewegbar gelagerten Arbeitskörper, der durch eine abwechselnde Druckbeaufschlagung vor und hinter dem Arbeitskörper hin- und her bewegbar ist, und mit einem Schaltventil zu einer Schaltung der Druckbeaufschlagung, bekannt.

### Offenbarung der Erfindung

Die Erfindung geht aus von einer pneumatischen Werkzeugvorrichtung, insbesondere für eine Handwerkzeugmaschine, mit zumindest einem bewegbar gelagerten Arbeitskörper, der durch eine abwechselnde Druckbeaufschlagung vor und hinter dem Arbeitskörper hin und her bewegbar ist, und mit zumindest einem Schaltventil zu einer Schaltung der Druckbeaufschlagung.

Es wird eine Fremdsteuereinheit vorgeschlagen, die das Schaltventil steuert. Unter einer _{"}Werkzeugvorrichtung" soll in diesem Zusammenhang eine Vorrichtung insbesondere einer Handwerkzeugmaschine verstanden werden, die dazu vorgesehen ist, eine insbesondere zyklische Arbeitsbewegung und/oder einen Teil einer insbesondere zyklischen Arbeitsbewegung eines in einer Werkzeugaufnahme der Werkzeugvorrichtung angeordneten Werkzeugs zu erzeugen. Eine Arbeitsbewegung kann zum Beispiel eine Sägebewegung eines Sägeblatts, eine Eintreibbewegung eines Tackers, eine Pumpbewegung einer Pumpeinheit einer Spritzpistole, eine Schwingung eines Schleifblatts oder eine vergleichbare Bewegung sein. Insbesondere soll unter einer Arbeitsbewegung in diesem Zusammenhang jedoch eine schlagende Arbeitsbewegung verstanden werden, wie sie insbesondere zu einer Bearbeitung eines Werkstücks mit einem Bohr- und/oder Meißelwerkzeug erforderlich ist. Insbesondere bei einem Bohrwerkzeug kann neben der schlagenden Komponente der Arbeitsbewegung eine weitere, insbesondere rotierende Komponente der Arbeitsbewegung auf eine, dem Fachmann bekannte Art und Weise erzeugt werden. Unter _{"}pneumatisch" soll in diesem Zusammenhang insbesondere verstanden werden, dass die Druckbeaufschlagung des Arbeitskörpers mit einem kompressiblen Druckmedium erfolgt. Bevorzugt ist das kompressible Druckmedium Druckluft. Ein Fachmann kann aber auch ein anderes geeignetes kompressibles, insbesondere gasförmiges Druckmedium wählen. Unter einer "Handwerkzeugmaschine" soll insbesondere eine werkstückbearbeitende Maschine, wie insbesondere eine Bohrmaschine, ein Bohrhammer, ein Meißelhammer, ein Tacker, ein Schleifgerät, ein Winkelschleifer, eine Säge wie eine Pendel- oder Stichsäge, ein Hobel, ein Schrauber, eine Fräse, ein Gartengerät und/oder ein Multifunktionswerkzeug verstanden werden. Bevorzugt ist die Handwerkzeugmaschine als elektrisch betriebene Handwerkzeugmaschine ausgebildet. Es sind aber auch andere Werkzeugmaschinen denkbar, insbesondere pneumatisch angetriebene Werkzeugmaschinen wie pneumatische Bohr- und/oder Schlaghämmer. Ebenfalls kann es einem Fachmann als sinnvoll erscheinen, die erfindungsgemäße Werkzeugvorrichtung bei einer stationären Werkzeugmaschine einzusetzen. Unter einem bewegbar gelagerten "Arbeitskörper" soll in diesem Zusammenhang insbesondere ein Bauteil verstanden werden, welches zumindest einen Teil der insbesondere zyklischen Arbeitsbewegung erzeugt. Der Arbeitskörper kann zum Beispiel ein Kolben sein, der eine Sägebewegung erzeugt. Insbesondere kann der Arbeitskörper ein Schläger einer Schlagwerkvorrichtung sein, der eine schlagende Arbeitsbewegung direkt oder indirekt auf das Werkzeug und/oder die Werkzeugaufnahme überträgt. Bevorzugt wird der Arbeitskörper zyklisch mit einer Frequenz zwischen 1 und 200 Hz, besonders bevorzugt mit einer Frequenz zwischen 10 und 80 Hz, zyklisch hin- und herbewegt. Ein Bewegungszyklus des Arbeitskörpers bestehend aus einer Hin- und Herbewegung dauert bevorzugt zwischen 5 ms und 1 s, besonders bevorzugt zwischen 12,5 ms und 88 ms. Unter einem _{"}Schaltventil" soll in diesem Zusammenhang insbesondere ein Ventil verstanden werden, das dazu vorgesehen ist, zumindest einen Raum abhängig von einer Schaltstellung mit zumindest einem weiteren Raum zu verbinden. Bevorzugt ist das Schaltventil dazu vorgesehen, zumindest eine Druckquelle abhängig von einer Schaltstellung mit einem Raum vor dem Arbeitskörper und/oder einem Raum hinter dem Arbeitskörper zu verbinden. Das Schaltventil kann wirksam eine Druckbeaufschlagung vor und/oder hinter dem Arbeitskörper bewirken und die Hin- und Herbewegung des Arbeitskörpers steuern.

Unter einer "Fremdsteuereinheit" soll in diesem Zusammenhang insbesondere eine Einheit verstanden werden, die dazu vorgesehen ist, zumindest die abwechselnde Druckbeaufschlagung des Arbeitskörpers zu steuern und/oder zu regeln. Insbesondere kann die Fremdsteuereinheit dazu vorgesehen sein, eine Bewegungsfrequenz des Arbeitskörpers zu steuern und oder zu regeln. Die Frequenz kann unabhängig von einer Eigenfrequenz der Arbeitskörperbewegung sein. Weiter kann die Frequenz unabhängig von einer Drehzahl einer Antriebseinheit der Werkzeugvorrichtung einstellbar sein. Die Fremdsteuereinheit kann zu diesem Zweck das Schaltventil geeignet schalten. Die Fremdsteuereinheit kann bevorzugt über zumindest eine Messeinrichtung verfügen, die zumindest ein Eingangssignal bereitstellt. Das Eingangssignal kann die Steuerung- und/oder Regelung der Druckbeaufschlagung beeinflussen. Eingangssignale können bevorzugt eine Position und/oder Geschwindigkeit und/oder Beschleunigung des Arbeitskörpers sein, eine aktuelle Temperatur und/oder ein aktueller Luftdruck, und eine Benutzereingabe, wie eine Schalterstellung eines Betätigungsschalters und/oder eine Eingabe mit Hilfe einer Eingabeeinheit. Es sind weitere, dem Fachmann für eine Steuerung und/oder Reglung der Druckbeaufschlagung des Arbeitskörpers sinnvoll erscheinende Eingangssignale denkbar. Es kann eine flexible Steuerung und/oder Regelung einer Bewegung des Arbeitskörpers erreicht werden. Insbesondere kann eine Frequenz, mit der der Arbeitskörper bewegt wird, variiert werden. Es kann ein besonders effizienter Betrieb der pneumatischen Werkzeugvorrichtung erreicht werden. Die Bewegung des Arbeitskörpers kann optimal auf die jeweilige Aufgabe angepasst werden.

Weiter wird vorgeschlagen, dass die Fremdsteuereinheit als elektrische Fremdsteuereinheit ausgebildet ist. Es sind aber auch andere Ausbildungen denkbar, wie mechanische und/oder pneumatische Ausbildungen der Steuer- und/oder Regeleinheit. Bevorzugt verfügt die Steuer- und/oder Regeleinheit über eine Speichereinheit und/oder eine Recheneinheit. In der Speichereinheit können Steuer- und/oder Regelparameter abgespeichert sein. Insbesondere kann die Fremdsteuereinheit Bestandteil einer Steuer- und/oder Regeleinheit der Werkzeugvorrichtung sein. Die Steuer- und/oder Regeleinheit der Werkzeugvorrichtung kann weitere Funktionen der Werkzeugvorrichtung, wie insbesondere einen Antriebsmotor und/oder einen Kompressor steuern und/oder regeln. Der Betrieb einzelner Elemente der Werkzeugvorrichtung kann besonders gut aufeinander abgestimmt werden.

Weiter wird vorgeschlagen, dass das Schaltventil als Wegeventil ausgebildet ist. Unter einem "Wegeventil" soll in diesem Zusammenhang insbesondere ein Schaltventil verstanden werden, das dazu vorgesehen ist, einen Strömungsweg von zumindest einer Druckquelle zu zumindest einer Drucksenke zwischen zumindest zwei möglichen Wegen umzuschalten. Bevorzugt ist das Schaltventil als 4/2-Wegeventil ausgebildet. Unter einem "4/2-Wegeventil" soll ein Wegeventil mit 4 Druckanschlüssen und zwei Schaltstellungen verstanden werden, wobei zwei Druckanschlüsse abhängig von der Schaltstellung wechselseitig mit den zwei weiteren Druckanschlüssen verbunden werden. Insbesondere kann das Schaltventil dazu vorgesehen sein, einen Raum vor und hinter dem Arbeitskörper wechselseitig mit einer Druckquelle und/oder einer Drucksenke zu verbinden. Unter einem Raum "vor" dem Arbeitskörper soll insbesondere ein abgeschlossener Raum verstanden werden, der von der der Werkzeugaufnahme zugewandten Seite des Arbeitskörpers direkt oder indirekt begrenzt wird. Unter einem Raum "hinter" dem Arbeitskörper soll insbesondere ein abgeschlossener Raum verstanden werden, der von der der Werkzeugaufnahme abgewandten Seite des Arbeitskörpers direkt oder indirekt begrenzt wird. Das Schaltventil kann wirksam eine Druckbeaufschlagung vor und/oder hinter dem Arbeitskörper bewirken und die Hin- und Herbewegung des Arbeitskörpers steuern.

Weiter wird vorgeschlagen, dass das Schaltventil zumindest teilweise von einem Durchgangsventil gebildet wird. Unter einem "Durchgangsventil" soll in diesem Zusammenhang insbesondere ein Ventil verstanden werden, das dazu vorgesehen ist, einen Ventildurchgang zu öffnen oder zu schließen. Insbesondere kann das Durchgangsventil kurze Schaltzeiten aufweisen. Bevorzugt beträgt eine Schaltzeit des Durchgangsventils weniger als 10 ms, besonders bevorzugt weniger als 5 ms. Dem Fachmann sind schnell schaltende Durchgangsventile, zum Beispiel als CNG-Einblasventile aus dem Motorenbau (Erdgasmotoren), bekannt. Insbesondere können mehrere Durchgangsventile die Funktion des Schaltventils übernehmen. Es kann jeweils zumindest ein Durchgangsventil zur Druckbeaufschlagung vor und hinter dem Arbeitskörper vorgesehen sein. Es kann jeweils zumindest ein weiteres Durchgangsventil dazu vorgesehen sein, die Räume vor und hinter dem Arbeitskörper mit einer Drucksenke zu verbinden. Die Funktion eines 4/2-Wege-Schaltventils kann bevorzugt durch 4 Durchgangsventile nachgebildet sein. Die Fremdsteuereinheit kann bevorzugt dazu vorgesehen sein, die Durchgangsventile koordiniert anzusteuern und/oder zu regeln. Es kann ein besonders einfacher und kostengünstiger Aufbau des Schaltventils erreicht werden. Es können besonders schnelle Schaltzeiten erreicht werden.

Weiter wird ein Druckventil vorgeschlagen, das dazu vorgesehen ist, zumindest ein Beschleunigungsprofil des Arbeitskörpers zu steuern und/oder zu regeln. Bevorzugt ist die Fremdsteuereinheit dazu vorgesehen, das Druckventil zu steuern und/oder zu regeln. Unter einer Steuerung und/oder Regelung eines "Beschleunigungsprofils" soll in diesem Zusammenhang insbesondere verstanden werden, dass das Druckventil die Höhe einer Beschleunigung des Arbeitskörpers während der Bewegung des Arbeitskörpers zumindest während eines Teils des Bewegungsablaufs steuernd und/oder regelnd variiert. Insbesondere kann das Druckventil dazu vorgesehen sein, Beschleunigungsspitzen des Arbeitskörpers zu vermeiden, indem es die Druckbeaufschlagung zumindest während Teilen des Bewegungsablaufs begrenzt. Bevorzugt kann das Druckventil dazu vorgesehen sein, zumindest während Teilen des Bewegungsablaufs des Arbeitskörpers die Druckbeaufschlagung zumindest aufrechtzuerhalten, um eine andauernde Beschleunigung zu erreichen. Es kann eine besonders effiziente Beschleunigung des Arbeitskörpers erreicht werden. Insbesondere kann der Arbeitskörper bei einer Beschleunigung in eine die Arbeitsbewegung erzeugende Richtung eine besonders wirksame Arbeitsbewegung erzeugen. Eine wirksame Arbeitsbewegung kann bei einer Schlagwerkvorrichtung erreicht werden, indem der Arbeitskörper mit einer besonders hohen Geschwindigkeit auf das Werkzeug oder einen Schlagbolzen auftrifft. Der Arbeitskörper kann besonders schnell in der Rückholbewegung in eine Ausgangsposition zurückkehren. Der Arbeitskörper kann insbesondere am Ende der Rückholbewegung besonders wirksam abgebremst werden. Insbesondere kann ein Aufprall des Arbeitskörpers auf weitere Teile der Werkzeugvorrichtung und/oder hohe Beschleunigungen am Ende der Rückholbewegung vermieden werden. Es kann ein besonders vibrationsarmer Betrieb der Werkzeugvorrichtung erreicht werden, wenn Beschleunigungsspitzen vermieden werden. Ein Komfort für den Benutzer kann erhöht werden. Die Effizienz der Werkzeugvorrichtung kann erhöht werden.

Weiter wird ein Federelement vorgeschlagen, welches dazu vorgesehen ist, in zumindest einem Betriebszustand auf den Arbeitskörper eine Kraft in einer Rückholrichtung auszuüben. Unter einer "Rückholrichtung" soll in diesem Zusammenhang insbesondere eine Richtung verstanden werden, die der Richtung vom Arbeitskörper zur Werkzeugaufnahme und/oder dem Arbeitswerkzeug entgegengesetzt ist. Unter einem "Federelement" soll in diesem Zusammenhang insbesondere ein Element verstanden werden, welches dazu vorgesehen ist, bei einer Auslenkung eine Rückstellkraft zu erzeugen, wie insbesondere eine Schraubenfeder. Die maximale Auslenkung des Federelements kann insbesondere zumindest 1/4 der Rückholbewegung betragen, bevorzugt wenigstens die Hälfte, besonders bevorzugt mehr als 2/3 der Rückhohlbewegung. Die Rückholbewegung kann besonders schnell erfolgen.

In einer vorteilhaften Ausgestaltung der Erfindung wird zumindest ein Hochdruckspeicher zur Bereitstellung von Hochdruck und/oder zumindest ein Niederdruckspeicher zur Aufnahme von entspanntem Druckmedium vorgeschlagen. Unter einem "Hochdruckspeicher" soll in diesem Zusammenhang insbesondere ein Speicher verstanden werden, der von einem Kompressor mit komprimiertem Druckmedium, das zu einer Druckbeaufschlagung des Arbeitskörpers vorgesehen ist, gefüllt wird. Durch den Hochdruckspeicher kann ein Druckabfall verringert werden, wenn kurzfristig mehr Druckmedium zur Druckbeaufschlagung verbraucht wird als der Kompressor liefern kann. Bevorzugt beträgt bei einer Beschleunigung des Arbeitskörpers ein Hochdruckabfall gegenüber einem Solldruck im Betrieb der Werkzeugvorrichtung maximal 50%, besonders bevorzugt weniger als 30%. Unter einem "Niederdruckspeicher" soll in diesem Zusammenhang insbesondere ein Speicher verstanden werden, der Druckmedium aufnimmt nachdem es zur Druckbeaufschlagung des Arbeitskörpers genutzt wurde. Bevorzugt weist der Niederdruckspeicher einen Druck auf, der zumindest in einem Betriebszustand höher ist als ein Luftdruck der die Werkzeugvorrichtung umgebenden Luft. Besonders bevorzugt weist die Werkzeugvorrichtung einen Hochdruckspeicher und einen Niederdruckspeicher auf. Bevorzugt entnimmt der Kompressor über dem Niederdruckspeicher Druckmedium zur Verdichtung und führt dieses dem Hochdruckspeicher zu. Der Kompressor kann zusätzlich Druckmedium aus einer weiteren Quelle zuführen, insbesondere zum Ausgleich von Leckverlusten und/oder zu Betriebsbeginn. Insbesondere kann der Kompressor zu diesem Zweck Umgebungsluft nutzen. Der Druck des Hochdruckspeichers kann aus dem Druck des Niederdruckspeichers verglichen mit einer Erzeugung ausgehend vom Druckniveau des Luftdrucks mit einem geringeren Energieeinsatz erreicht werden. Das Druckmedium kann in einem geschlossenen Kreislauf geführt werden. Eine Verschmutzung der Werkzeugvorrichtung durch Zuführen von Fremdluft kann vermieden oder verringert werden. Es können weitere Ventile vorgesehen sein, um die Entnahme und Weitergabe von Druck aus der Umgebung und/oder dem Niederdruckspeicher und/oder dem Hochdruckspeicher zu steuern. Es kann ein Ventil dazu vorgesehen sein, eine Verbindung zwischen dem Hochdruckspeicher und dem Schaltventil der Werkzeugvorrichtung zu öffnen oder zu verschließen. Es kann ein Ventil dazu vorgesehen sein, eine Verbindung zwischen dem Niederdruckspeicher und dem Schaltventil zu öffnen oder zu verschließen. Es kann ein Ventil dazu vorgesehen sein, eine Verbindung zwischen dem Kompressor und einer Ansaugeinrichtung für Umgebungsluft zu öffnen oder zu verschließen. Es kann ein Ventil dazu vorgesehen sein, eine Verbindung zwischen dem Kompressor und dem Niederdruckspeicher zu öffnen oder zu verschließen. Es kann ein effizientes Anlaufen der Werkzeugvorrichtung erreicht werden. Eine Verbindung zwischen Hochdruckspeicher und Schaltventil kann unterbrochen werden, während der Kompressor den Hochdruckspeicher auf ein vorgegebenes Druckniveau befüllt. Der Hochdruckspeicher kann besonders schnell befüllt werden. Ein unkontrollierter Betrieb der Werkzeugvorrichtung mit unzureichendem Druck kann vermieden werden. Eine Verbindung zwischen dem Schaltventil und dem Niederdruckspeicher kann unterbrochen werden, während der Kompressor Umgebungsluft ansaugt. Eine Entnahme von Luft aus der Werkzeugvorrichtung kann vermieden werden. Umgebungsluft kann besonders effizient angesaugt werden und die Werkzeugvorrichtung mit Luft gefüllt werden. Eine Verbindung zwischen dem Niederdruckspeicher und dem Kompressor kann unterbrochen werden, während der Kompressor Umgebungsluft ansaugt. Eine Entnahme von Luft aus dem Niederdruckspeicher kann vermieden werden, während die Werkzeugvorrichtung mit Luft befüllt wird. Es kann im Betrieb der Werkzeugvorrichtung zwischen einer Luftzufuhr aus dem Niederdruckspeicher und der Umgebung umgeschaltet werden. Ein Luftverlust durch Leckagen kann im Betrieb der Werkzeugvorrichtung ausgeglichen werden.

Weiter wird eine am Hochdruckspeicher angeordnete Kompressoreinheit vorgeschlagen. Unter einer "Kompressoreinheit" soll in diesem Zusammenhang insbesondere eine bevorzugt elektrisch angetriebene Pumpeinheit verstanden werden, die dazu vorgesehen ist, ein kompressibles Druckmedium zu verdichten. Bevorzugt ist die Kompressoreinheit mit dem Niederdruckspeicher und dem Hochdruckspeicher verbunden. Besonders bevorzugt ist die Kompressoreinheit innerhalb der Handwerkzeugmaschine angeordnet. Eine Handwerkzeugmaschine mit einer Werkzeugvorrichtung mit am Hochdruckspeicher angeordneter Kompressoreinheit kann besonders kompakt sein. Auf weitere, externe Aggregate kann verzichtet werden.

Besonders bevorzugt ist die Werkzeugvorrichtung als Schlagwerkvorrichtung und der Arbeitskörper als Schläger ausgebildet. Der Schläger kann eine schlagende Arbeitsbewegung direkt oder indirekt auf das Werkzeug und/oder die Werkzeugaufnahme übertragen. Die Werkzeugvorrichtung kann bevorzugt in einem Bohr- und/oder Meißelhammer eingesetzt werden. Die Bewegung des Schlägers kann besonders effizient gesteuert und/oder geregelt werden. Ein Betrieb kann besonders vibrationsarm sein. Die Schlagwerkvorrichtung kann besonders wirksam sein. Insbesondere kann die Schlagwerkvorrichtung besonders zuverlässig sein.

Weiter wird eine Handwerkzeugmaschine mit einer erfindungsgemäßen Werkzeugvorrichtung vorgeschlagen. Die Handwerkzeugmaschine kann besonders effizient und vibrationsarm sein.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Bohrhammers mit einer erfindungsgemäßen Werkzeugvorrichtung,
- Fig. 2: eine schematische Darstellung einer Druckversorgung der erfindungsgemäßen Werkzeugvorrichtung,
- Fig. 3: eine schematische Darstellung der Werkzeugvorrichtung mit einem Arbeitskörper in einer hinteren Endposition,
- Fig. 4: eine schematische Darstellung der Werkzeugvorrichtung mit dem Arbeitskörper in einer vorderen Endposition und
- Fig. 5: eine schematische Darstellung einer Werkzeugvorrichtung in einem zweiten Ausführungsbeispiel.

### Beschreibung der Ausführungsbeispiele

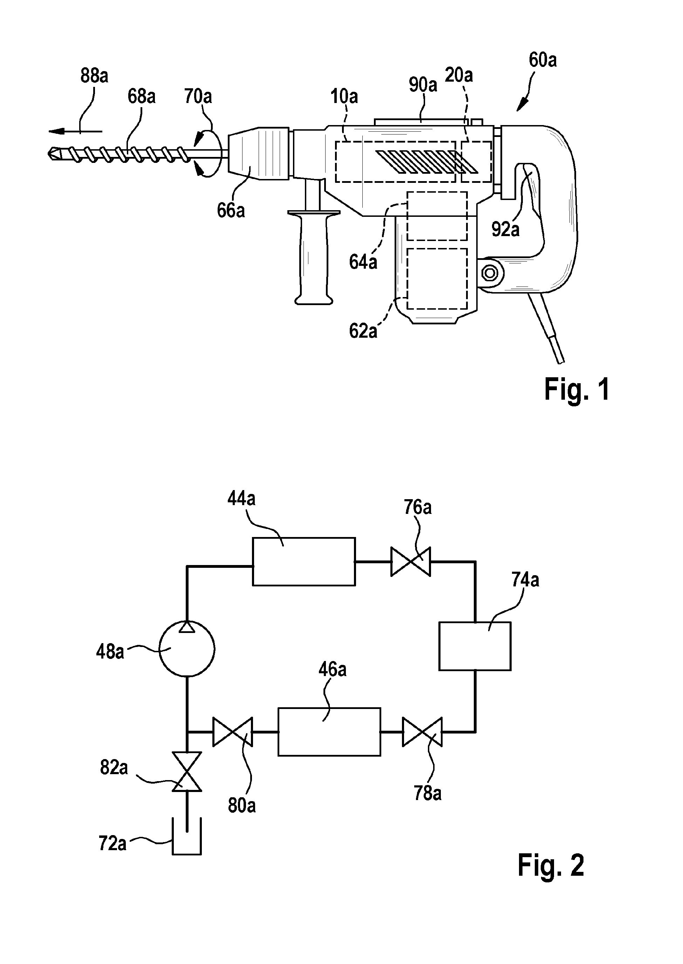

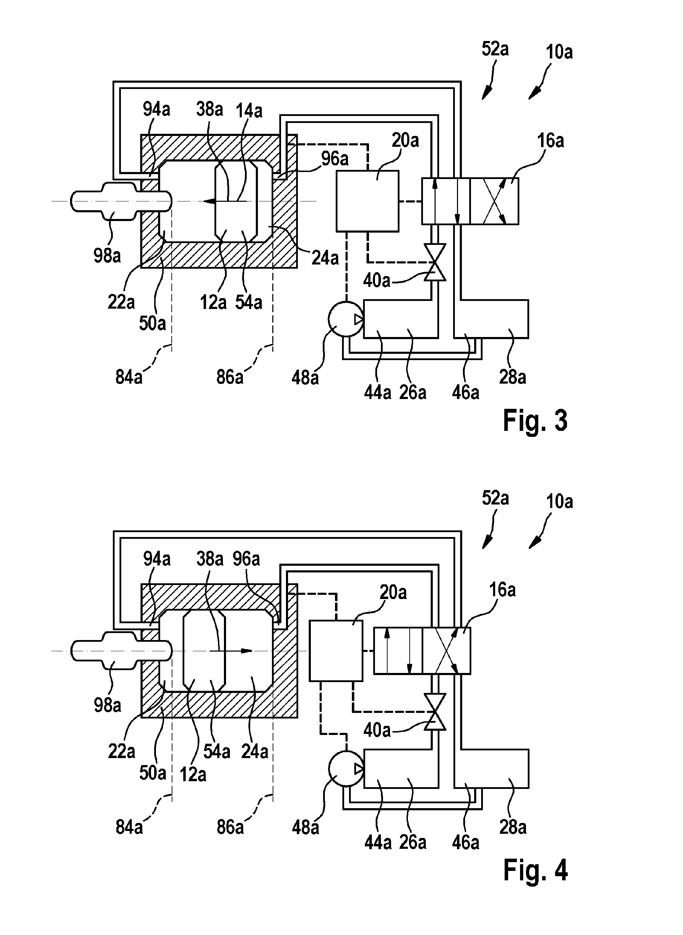

Figur 1 zeigt eine Handwerkzeugmaschine 60a, die als Bohrhammer ausgebildet ist und eine erfindungsgemäße Werkzeugvorrichtung 10a aufweist. Die Handwerkzeugmaschine 60a weist einen elektrischen Motor 62a auf, der in zumindest einem Betriebszustand über eine Getriebeeinheit 64a in einer, dem Fachmann bekannten Art ein in einem Werkzeughalter 66a eingespanntes Werkzeug 68a in einer rotierenden Arbeitsbewegung 70a antreibt. Das Werkzeug 68a kann zum Beispiel ein Bohrer oder ein Meißel sein. Die Werkzeugvorrichtung 10a weist einen bewegbar gelagerten Arbeitskörper 12a auf, der durch eine abwechselnde Druckbeaufschlagung eines Raums 22a vor und eines Raums 24a hinter dem Arbeitskörper 12a hin- und her bewegbar ist, und ein Schaltventil 16a zu einer Schaltung der Druckbeaufschlagung, und eine elektrische Fremdsteuereinheit 20a, die das Schaltventil 16a steuert (Figur 3 und Figur 4). Die Fremdsteuereinheit 20a kann durch die Steuerung des Schaltventils 16a eine Arbeitskörperbewegung 38a beeinflussen, insbesondere eine Frequenz der Arbeitskörperbewegung 38a. Die Werkzeugvorrichtung 10a verfügt über nicht näher dargestellte Lagesensoren, die eine Position des Arbeitskörpers 12a und die Arbeitskörperbewegung 38a an die Fremdsteuereinheit 20a übermitteln. Die Fremdsteuereinheit 20a kann die Richtung der Druckbeaufschlagung des Arbeitskörpers 12a umkehren und so den Arbeitskörper 12a in eine Gegenrichtung beschleunigen, zum Beispiel beim Erreichen von Endpositionen 84a und 86a. Das Schaltventil 16a ist als 4/2-Wegeventil ausgebildet. Die Werkzeugvorrichtung 10a ist als Schlagwerkvorrichtung 52a und der Arbeitskörper 12a als Schläger 54a der Schlagwerkvorrichtung 52a ausgebildet. Der Arbeitskörper 12a ist in einem Führungsrohr 50a bewegbar gelagert. Das Führungsrohr 50a bildet mit dem Arbeitskörper 12a einen doppelseitig wirkenden Druckzylinder, indem der Arbeitskörper 12a einen Kolben bildet. Der Arbeitskörper 12a wird mit der Arbeitskörperbewegung 38a zwischen den Endpositionen 84a und 86a hin- und herbewegt. Das Führungsrohr 50a ist beidseitig verschlossen und verfügt über Öffnungen 94a und 96a, die mit dem Schaltventil 16a verbunden sind und von diesem wechselseitig mit einer Druckquelle 26a und einer Drucksenke 28a verbunden werden. A einem dem Werkzeughalter 66a zugewandten Ende ragt ein Schlagbolzen 98a druckdicht gelagert ins Führungsrohr 50a. Eine Kompressoreinheit 48a komprimiert Luft und bildet eine Druckquelle 26a zur Bereitstellung eines Drucks zur Druckbeaufschlagung. Als Druckmedium dient Druckluft. Ein Druckventil 40a ist dazu vorgesehen, ein Beschleunigungsprofil des Arbeitskörpers 12a zu steuern und/oder zu regeln. Das Druckventil 40a ist mit der Fremdsteuereinheit 20a verbunden und wird von dieser gesteuert oder geregelt. Das Druckventil 40a ist strömungstechnisch zwischen der Kompressoreinheit 48a und dem Schaltventil 16a angeordnet und beeinflusst eine Durchflussmenge des Druckmediums. Weiter verfügt die Werkzeugvorrichtung 10a über einen Hochdruckspeicher 44a zur Bereitstellung von Hochdruck, der strömungstechnisch zwischen einem Hochdruckausgang der Kompressoreinheit 48a und dem Schaltventil 16a angeordnet ist, und über einen Niederdruckspeicher 46a zur Aufnahme von entspanntem Druckmedium, der strömungstechnisch zwischen dem Schaltventil 16a und einem Niederdruckeingang der Kompressoreinheit 48a angeordnet ist. Die Kompressoreinheit 48a ist mechanisch am Hochdruckspeicher 44a angeordnet. Die Kompressoreinheit 48a wird durch den Motor 62a angetrieben. Es ist aber auch denkbar, dass die Kompressoreinheit 48a über einen eigenen Antriebsmotor verfügt oder dass der Handwerkzeugmaschine 60a Druckluft extern zugeführt wird. Der Arbeitskörper 12a überträgt bei einem Aufprall auf den Schlagbolzen 98a einen Schlagimpuls auf das im Werkzeughalter 66a eingespannte Werkzeug 68a. Das Werkzeug 68a führt durch den Schlagimpuls eine schlagende Arbeitsbewegung 88a aus. Über eine Bedieneinheit 90a kann ein Benutzer Parameter vorgeben, wie eine Schlagfrequenz und eine Schlagstärke, und zumindest einen Betriebsmodus. Die Parameter können absolut vorgegeben werden oder relativ zur Stellung eines Bedienschalters 92a definiert sein und werden durch die Fremdsteuereinheit 20a ausgewertet. Die Fremdsteuereinheit 20a kann durch Steuern oder Regeln des Schaltventils 16a und des Druckventils 40a die Richtung und Stärke der Druckbeaufschlagung des Arbeitskörpers 12a und somit seine Beschleunigung vorgeben und so die Arbeitskörperbewegung 38a bestimmen. In einem Meißelbetrieb kann die Schlagfrequenz und/oder die Schlagstärke durch Drücken des Bedienschalters 92a variiert werden. Eine rotierende Arbeitsbewegung 70a kann in einem Meißelbetrieb deaktiviert bleiben. In einem Schlagbohrbetrieb kann durch Drücken des Bedienschalters 92a eine Drehzahl des Werkzeugs 68a in der Arbeitsbewegung 70a vom Benutzer variiert werden, während abhängig vom gewählten Betriebsmodus Schlagfrequenz und/oder Schlagstärke in der Arbeitsbewegung 88a konstant bleiben können oder ebenfalls abhängig von der Stellung des Bedienschalters 92a variiert werden. Es sind weitere, dem Fachmann als sinnvoll erscheinende Kombinationen einer Steuerung und/oder Regelung der rotierenden Arbeitsbewegung 70a und der schlagenden Arbeitsbewegung 88a denkbar. Das Beschleunigungsprofil der Arbeitskörperbewegung 38a kann durch die Fremdsteuereinheit 20a optimiert werden. Es kann die Arbeitskörperbewegung 38a in einer Rückholrichtung 34a in Richtung der Endposition 86a durch weites Öffnen des Druckventils 40a mit einer hohen Beschleunigung begonnen werden, um eine kurze Rückholzeit zu erreichen. Vor Erreichen der Endposition 86a kann das Druckventil 40a weitgehend geschlossen werden, um eine Aufprallgeschwindigkeit das Arbeitskörpers 12a und Vibrationen zu reduzieren. Die Fremdsteuereinheit 20a kann die Druckbeaufschlagung mit Hilfe des Schaltventils 16a bereits in Gegenrichtung umschalten, bevor der Arbeitskörper die Endposition 86a erreicht und den Arbeitskörper 12a gezielt abbremsen, um einen Aufprall ganz zu vermeiden oder zu vermindern. Bei der Arbeitskörperbewegung 38a in einer Arbeitsrichtung 14a in Richtung des Schlagbolzens 98a kann das Druckventil 40a bis zu einem Aufprall des Arbeitskörpers 12a auf den Schlagbolzen 98a weit geöffnet bleiben, um eine maximale Aufprallgeschwindigkeit und einen maximalen Schlagimpuls zu erreichen. Soll ein geringerer Schlagimpuls ausgeübt werden, kann die Fremdsteuereinheit 20a das Druckventil 40a vorzeitig schließen, oder den Arbeitskörper 12a vor dem Aufprall gezielt durch Umschalten der Druckbeaufschlagung abbremsen. Es kann eine hohe Schlagfrequenz bei einer geringen Schlagstärke erreicht werden, indem der Arbeitskörper 12a eine im Mittel schnelle Arbeitskörperbewegung 38a ausübt und indem er kurz vor dem Aufprall auf den Schlagbolzen 98a abgebremst wird. Eine niedere Schlagfrequenz bei hoher Schlagstärke kann erreicht werden, indem der Arbeitskörper 12a zunächst langsam in Richtung des Schlagbolzens 98a beschleunigt wird oder indem mit dem Beginn der Beschleunigung zugewartet wird, um dann den Arbeitskörper 12a bis zum Aufprall auf den Schlagbolzen 98a mit einer maximalen Druckbeaufschlagung zu beschleunigen. Es sind weitere, dem Fachmann als sinnvoll erscheinende Kombinationen von Beschleunigungsprofilen möglich, die einen besonders wirksamen und/oder vibrations- und/oder lärmarmen und/oder effizienten Betrieb der Werkzeugvorrichtung erlauben.

Die Werkzeugvorrichtung 10a wird mit Druckluft betrieben, die von der Kompressoreinheit 48a bereitgestellt wird. Um insbesondere eine Inbetriebnahme der Werkzeugvorrichtung 10a weiter zu erläutern, zeigt Figur 2 einen vorgeschlagenen, geeigneten Druckkreislauf der Werkzeugvorrichtung 10a. Ein Fachmann wird diesen Druckkreislauf den Anforderungen der jeweiligen Anwendung anpassen. Die Werkzeugvorrichtung 10a den über einen Hochdruckspeicher 44a, den Niederdruckspeicher 46a und eine Ansaugeinrichtung 72a über Umgebungsluft verfügen. Eine Arbeitseinheit 74a, die den bewegbar gelagerten Arbeitskörper 12a, das Schaltventil 16a und ein Druckventil 40a enthält, ist über ein Ventil 76a mit dem Hochdruckspeicher 44a und über ein Ventil 78a dem Niederdruckspeicher 46a verbunden. Der Niederdruckspeicher 46a ist über ein Ventil 80a mit der Kompressoreinheit 48a verbunden. Die Ansaugeinrichtung 72a ist über ein Ventil 82a mit der Kompressoreinheit 48a verbunden. Diese Ventile 76a, 78a, 80a, 82a und die Ansaugeinrichtung 72a sind in den weiteren Figuren zur Vereinfachung nicht dargestellt. In vereinfachten Ausbildungen des Druckkreislaufs können insbesondere der Niederdruckspeicher 46a sowie die Ventile 78a, 80a und/oder 82a entfallen. Insbesondere die Ventile 76a und 78a und/oder das Druckventil 40a können Bestandteil des Schaltventils 16a sein. Insbesondere kann der Niederdruckspeicher 46a entfallen und Luft der Kompressoreinheit 48a immer über die Ansaugeinrichtung 72a zugeführt werden. Die Arbeitseinheit 74a wird in diesem Fall in die Umgebung entlüftet und die Rückführung der Luft über den Niederdruckspeicher 46a in die Kompressoreinheit 48a entfällt. Die im Folgenden beschriebene Funktionsweise gilt bei diesen vereinfachten Ausführungen sinngemäß vereinfacht. Um bei der Inbetriebnahme den Hochdruckspeicher 44a mit Druckmedium zu füllen wird zunächst das Ventil 76a geschlossen und die Kompressoreinheit 48a in Betrieb genommen. Die Kompressoreinheit 48a saugt Luft aus der Umgebung über die Ansaugeinrichtung 72a an. Ist ein Ventil 82a zwischen der Ansaugeinrichtung 72a und der Kompressoreinheit 48a angeordnet, so ist dies geöffnet. Wird ein für den Betrieb notwendiger Druck im Hochdruckspeicher 44a erreicht, wird das Ventil 76a geöffnet, so dass die abwechselnde Druckbeaufschlagung des Arbeitskörpers 12a beginnen kann. Verfügt der Druckkreislauf über einen Niederdruckspeicher 46a, wird das Ventil 82a geschlossen und die Ventile 78a und 80a geöffnet, so dass der Kompressoreinheit 48a Luft über den Niederdruckspeicher 46a zugeführt wird. Sinkt die Menge an Druckmedium im Druckkreislauf, zum Beispiel durch Leckagen, im Betrieb ab, so kann dem System im Betrieb Druckmedium zugeführt werden. Dazu wird das Ventil 80a geschlossen und das Ventil 82a geöffnet, so dass der Kompressoreinheit 48a Luft über die Ansaugeinrichtung 72a statt über den Niederdruckspeicher 46a zugeführt wird. Das geschlossene Ventil 80a verhindert, dass Niederdruck durch die Ansaugeinrichtung 72a entweicht und sich der Niederdruckspeicher 46a so leert. Ist die Luftmenge im Druckkreislauf wieder ausreichend, wird das Ventil 82a wieder geschlossen und das Ventil 80a geöffnet. Das Ventil 80a kann auch entfallen, insbesondere wenn nur eine initiale Befüllung des Druckkreislaufs notwendig ist, bevor die Druckbeaufschlagung des Arbeitskörpers 12a beginnt. Die Ventile 76a, 78a, 80a und 82a werden durch die Fremdsteuereinheit 20a gesteuert. Nicht näher dargestellte Drucksensoren dienen der Fremdsteuereinheit 20a zur Überwachung der gewünschten Drücke im Druckkreislauf, insbesondere im Hochdruckspeicher 44a und im Niederdruckspeicher 46a, sowie eines aktuellen Luftdrucks der Umgebung der Werkzeugvorrichtung 10a.

Die nachfolgende Beschreibung und die Zeichnung eines weiteren Ausführungsbeispiels beschränkt sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels verwiesen werden kann. Zur Unterscheidung der Ausführungsbeispiele ist anstelle des Buchstabens a des ersten Ausführungsbeispiels der Buchstabe b den Bezugszeichen des weiteren Ausführungsbeispiels nachgestellt.

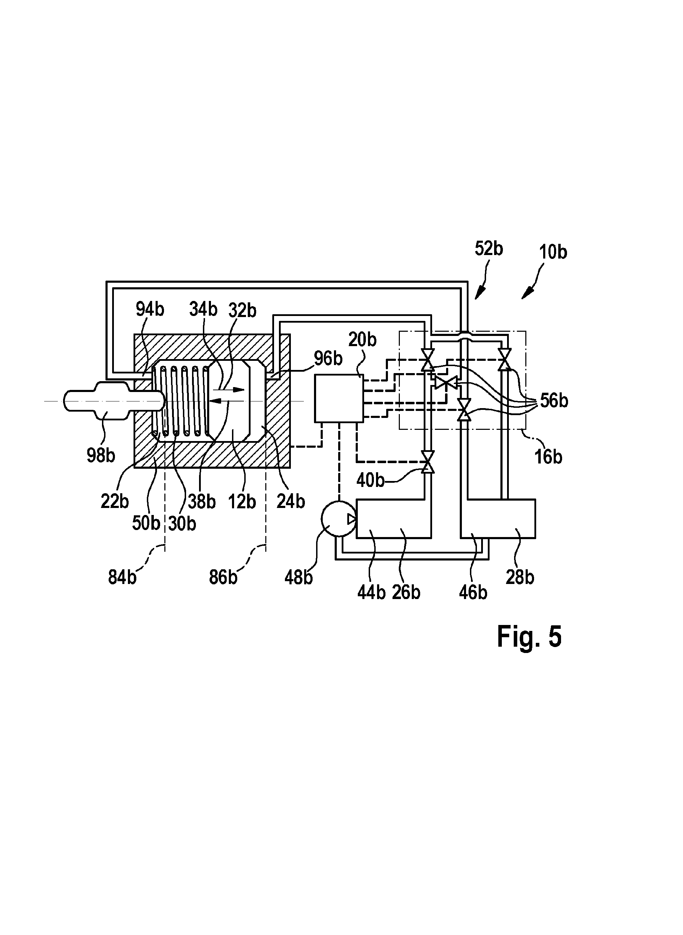

Figur 5 zeigt eine weitere Ausbildung einer erfindungsgemäßen, als Schlagwerkvorrichtung 52b ausgebildeten pneumatischen Werkzeugvorrichtung 10b. Diese unterscheidet sich vom vorangegangenen Beispiel insbesondere dadurch, dass ein Schaltventil 16b von vier Durchgangsventilen 56b gebildet wird. Die Durchgangsventile 56b sind so angeordnet, dass sie strömungstechnisch ein 4/2-Wegeventil bilden und einen Raum 22b vor und einen Raum 24b hinter einem Arbeitskörper 12b wechselseitig mit einer Druckquelle 26b und einer Drucksenke 28b verbinden. So kann der Arbeitskörper 12b durch eine abwechselnde Druckbeaufschlagung vor und hinter dem Arbeitskörper 12b hin- und herbewegt werden. Die Durchgangsventile 56b zeichnen sich durch besonders kurze Schaltzeiten aus, insbesondere verglichen mit einem Schiebeventil. Es können hier schnell schaltende Durchgangsventile 56b zum Einsatz kommen, wie sie dem Fachmann als Ventile zum Befüllen von Zylindern mit Erdgas von Verbrennungsmotoren bekannt sind. Eine Fremdsteuereinheit 20b steuert die Durchgangsventile 56b so, dass ihre Schaltzeitpunkte aufeinander abgestimmt sind.

Weiter enthält die Werkzeugvorrichtung 10b ein Federelement 30b, welches in zumindest einem Betriebszustand auf den Arbeitskörper 12b eine Kraft 32b in einer Rückholrichtung 34b ausübt. Das Federelement 30b ist in dem einem Schlagbolzen 98b zugewandten Raum 22b vor dem Arbeitskörper 12b angeordnet und übt eine Kraft 32b auf den Arbeitskörper 12b aus. Durch die Kraft 32b wird der Arbeitskörper 12b in Richtung einer hinteren Endposition 86b beschleunigt. Eine Bewegung in Rückholrichtung 34b wird so unterstützt. Es ist nur eine geringe Druckbeaufschlagung für eine Bewegung in Rückholrichtung 34b erforderlich. Es ist ebenfalls möglich, dass für die Bewegung in Rückholrichtung 34b auf eine Druckbeaufschlagung verzichtet wird und diese durch das Federelement 30b erfolgt. Das Schaltventil 16b kann in diesem Fall als 2/2-Wegeventil ausgebildet sein und den Raum 24b auf der dem Schlagbolzen 98b abgewandten Seite des Arbeitskörpers 12b abwechselnd mit der Druckquelle 26b und der Drucksenke 28b verbinden und so eine Hin- und Herbewegung des Arbeitskörpers 12b auslösen.

## Patentansprüche

1. Pneumatische Werkzeugvorrichtung, insbesondere für eine Handwerkzeugmaschine, mit zumindest einem bewegbar gelagerten Arbeitskörper (12a,b), der durch eine abwechselnde Druckbeaufschlagung vor und hinter dem Arbeitskörper (12a,b) hin- und her bewegbar ist, und mit zumindest einem Schaltventil (16a,b) zu einer Schaltung der Druckbeaufschlagung, **gekennzeichnet durch** eine Fremdsteuereinheit (20a,b), die das Schaltventil (16a,b) steuert.

2. Pneumatische Werkzeugvorrichtung nach Anspruch 1, **dadurch gekennzeichnet, dass** die Fremdsteuereinheit (20a,b) als elektrische Fremdsteuereinheit (20a,b) ausgebildet ist.

3. Pneumatische Werkzeugvorrichtung nach Anspruch 1 oder Anspruch 2, **dadurch gekennzeichnet, dass** das Schaltventil (16a,b) als Wegeventil ausgebildet ist.

4. Pneumatische Werkzeugvorrichtung einem der vorhergehenden Ansprüche, **dadurch gekennzeichnet, dass** das Schaltventil (16b) zumindest teilweise von einem Durchgangsventil (56b) gebildet wird.

5. Pneumatische Werkzeugvorrichtung nach einem der vorhergehenden Ansprüche, **gekennzeichnet durch** ein Druckventil (40a,b), das dazu vorgesehen ist, zumindest ein Beschleunigungsprofil des Arbeitskörpers (12a,b) zu steuern und/oder zu regeln.

6. Pneumatische Werkzeugvorrichtung nach einem der vorhergehenden Ansprüche, **gekennzeichnet durch** ein Federelement (30b), welches dazu vorgesehen ist, in zumindest einem Betriebszustand auf den Arbeitskörper (12a,b) eine Kraft (32b) in einer Rückholrichtung (34a,b) auszuüben.

7. Pneumatische Werkzeugvorrichtung nach einem der vorhergehenden Ansprüche, **gekennzeichnet durch** zumindest einen Hochdruckspeicher (44a,b) zur Bereitstellung von Hochdruck und/oder zumindest einen Niederdruckspeicher (46a,b) zur Aufnahme von entspanntem Druckmedium.

8. Pneumatische Werkzeugvorrichtung nach Anspruch 7, **gekennzeichnet durch** eine am Hochdruckspeicher (44a,b) angeordnete Kompressoreinheit (48a,b).

9. Pneumatische Werkzeugvorrichtung nach einem der vorhergehenden Ansprüche, **dadurch gekennzeichnet, dass** die Werkzeugvorrichtung als Schlagwerkvorrichtung (52a,b) und der Arbeitskörper (12a,b) als Schläger (54a,b) ausgebildet ist.

10. Handwerkzeugmaschine mit einer Werkzeugvorrichtung (10a,b) nach einem der vorhergehenden Ansprüche.
